# FASCICULE DE BREVET EUROPEEN

(11) **EP 1 660 214 B1**
(45) Date de publication et mention de la délivrance du brevet: **30.04.2014**
(21) Numéro de dépôt: 04816124.4
(22) Date de dépôt: 01.09.2004
(51) Int. Cl.: B01D 47/06, B01D 53/18

(54) **APPAREIL ET PROCEDE POUR EXTRAIRE DES ELEMENTS GAZEUX, LIQUIDES ET/OU SOLIDES D UN MILIEU GAZEUX ET LES CONCENTRER DANS UN MI LIEU LIQUIDE**
VORRICHTUNG UND VERFAHREN ZUM EXTRAHIEREN VON GASFÖRMIGEN, FLÜSSIGEN UND/ODER FESTEN ELEMENTEN VON EINEM GASFÖRMIGEN MEDIUM UND KONZENTRIEREN DAVON IN EINEM FLÜSSIGEN MEDIUM
APPARATUS AND METHOD FOR EXTRACTING GASEOUS, LIQUID AND/OR SOLID ELEMENTS FROM A GASEOUS MEDIUM AND CONCENTRATING SAME IN A LIQUID MEDIUM

(30) Priorité: 04.09.2003 FR 0350500
(43) Date de publication de la demande: 31.05.2006
(73) Titulaire: Commissariat à l'Énergie Atomique et aux Énergies Alternatives, 75015 Paris (FR)
(72) Inventeur: CHARRUE, Pierre, F-37260 MONTS (FR); THEVENOT, Gilles, F-37250 MONTBAZON (FR); CAVALIN, Goulven, 29850 GOUESNOU (FR); DELMAS, Roger, F-29470 PLOUGASTEL-DAOULAS (FR)
(74) Mandataire: Ahner, Philippe
(86) Numéro de dépôt international: PCT/FR2004/050408
(87) Numéro de publication internationale: WO 2005/025721

(56) Documents cités:
- US-A- 3 960 523
- US-A- 4 595 399
- US-A- 5 277 707
- PATENT ABSTRACTS OF JAPAN vol. 1995, no. 07, 31 août 1995 (1995-08-31) -& JP 07 096025 A (ESUPO KK), 11 avril 1995 (1995-04-11)

## Description

### DOMAINE TECHNIQUE

L'invention se rapporte à un appareil, ainsi qu'à un procédé, permettant d'extraire des éléments susceptibles d'être présents dans un milieu gazeux et de les concentrer dans un milieu liquide et ce, que ces éléments soient gazeux, liquides ou solides, de nature chimique ou biologique, et qu'ils soient ou non solubles dans l'eau.

Cet appareil et ce procédé sont donc susceptibles de trouver application dans tous les domaines où l'on souhaite détecter ou doser des éléments susceptibles d'être présents, sous forme gazeuse, liquide ou solide, dans un environnement gazeux, tels que des gaz de combustion (CO, CO₂, SO₂, NOₓ, ...), des composés organiques volatils (COV : hexane, heptane et autres alcanes ; benzène, toluène, xylènes et autres composés aromatiques légers ; acétone, monoéthylcétone et autres cétones ; formaldéhyde, acétaldéhyde et autres aldéhydes ; perchloroéthylène, trichloroéthylène et autres carbures chlorés ; chlorofluorocarbures, ...), des hydrocarbures aromatiques polycycliques (HAP : benzo(a)pyrène, coronène, naphtalène, ...), des métaux lourds (plomb, mercure, arsenic, ...), des contaminants radioactifs ou encore des contaminants biologiques (micro-organismes, pollens).

En particulier, ils sont susceptibles d'être utilisés pour le contrôle et la surveillance de la pollution atmosphérique et de la qualité d'ambiances plus ou moins confinées, tant au niveau industriel, par exemple pour vérifier l'état sanitaire de chaînes de production et des émissions liées à cette production, qu'au niveau de collectivités (hôpitaux, établissements scolaires, salles de sports ou de spectacles, ...) ou même de particuliers (immeubles de bureaux ou d'habitation).

### ETAT DE LA TECHNIQUE ANTERIEURE

Pour analyser les éléments présents dans un milieu gazeux, et notamment les polluants atmosphériques, ont été proposés à ce jour de nombreux appareils qui peuvent être schématiquement classés en deux catégories.

En effet, il y a, d'une part, les appareils qui permettent d'effectuer une analyse en temps réel et qui sont utilisés comme systèmes d'alerte, par exemple dans le cadre d'une surveillance continue de la pollution atmosphérique.

Ces appareils utilisent généralement des techniques d'analyse fondées sur une propriété physique des éléments devant être analysés comme l'indice de réfraction, la conductivité thermique ou l'absorbance infrarouge. Ils ne sont donc étalonnés que pour une seule famille d'éléments, voire pour un seul élément, et n'assurent, de ce fait, qu'une analyse limitée à cette seule famille ou à ce seul élément.

Il y a, d'autre part, les appareils qui permettent d'extraire du milieu gazeux les éléments qui s'y trouvent et de les concentrer, l'identification et le dosage de ces éléments étant réalisés secondairement, soit par un système d'analyse (chromatographe par exemple) couplé à l'appareil d'extraction-concentration, soit dans un laboratoire. Ainsi, on connaît notamment :
- des appareils qui réalisent la collecte des éléments présents dans le milieu gazeux par filtration d'un flux de ce milieu gazeux sur un filtre solide (par exemple, un filtre en nylon ou en Téflon^{®}), et qui présentent l'inconvénient majeur de ne pas retenir les éléments dont la taille est inférieure à la porosité du filtre ;
- des appareils qui fixent les éléments présents dans le milieu gazeux sur une phase solide (charbon par exemple) par adsorption ;
- des appareils qui recueillent les éléments présents dans le milieu gazeux dans un liquide par déviation d'un flux de ce milieu gazeux dans ce liquide et séparation des éléments par inertie, et qui, eux non plus, ne permettent pas d'extraire les éléments de petite taille ;
- des appareils qui opèrent un transfert des éléments présents dans le milieu gazeux vers un liquide en faisant traverser à un flux de ce milieu gazeux un tube rempli de ce liquide et qui est terminé à ses deux extrémités par une membrane qui n'est perméable qu'aux gaz (référence **[1]**) ; ces appareils présentent donc le défaut de n'extraire du milieu gazeux que les éléments gazeux qu'il renferme (les éléments liquides et solides étant, en effet, retenus hors du tube) et par un contact entre le milieu gazeux et le liquide qui est insuffisant pour garantir la fiabilité de cette extraction ; et
- des appareils qui opèrent également un transfert des éléments présents dans le milieu gazeux vers un liquide mais par nébulisation de ce liquide au moyen d'un flux de ce milieu gazeux.

Un appareil est décrit dans JP-A-07 096 025.

La technique d'extraction-concentration par nébulisation, plus connue sous le nom anglo-saxon de *"mist chamber technique",* a été proposée pour la première fois en 1985 en vue de permettre l'analyse de gaz hydrosolubles présents dans l'atmosphère à l'état de traces.

Cette technique consiste à amener, dans une enceinte traversée de bas en haut par le milieu gazeux en un flux continu et contenant de l'eau dans sa partie basse, cette eau au contact du flux gazeux de manière à la transformer en un brouillard constitué de fines gouttelettes d'eau en suspension dans le milieu gazeux et à obtenir ainsi une surface d'interaction élevée entre ce milieu et l'eau propre à favoriser le transfert des gaz hydrosolubles de l'un vers l'autre. Dans le même temps, les gouttelettes d'eau se condensent sur la paroi de l'enceinte par coalescence et les gouttes ainsi formées s'écoulent le long de cette paroi en direction de la partie basse de l'enceinte. Elles permettent ainsi d'alimenter la partie basse de l'enceinte en eau et, donc, de nébuliser cette eau en continu et d'assurer ainsi son enrichissement progressif en gaz hydrosolubles.

Compte tenu de son principe, depuis près de 20 ans qu'elle existe, la technique d'extraction-concentration par nébulisation est exclusivement utilisée pour extraire d'un milieu gazeux et concentrer des éléments aptes à se dissoudre dans de l'eau ou dans une solution aqueuse, l'identification et le dosage de ces éléments étant effectués secondairement, généralement par chromatographie ionique.

Ainsi, par exemple, Talbot et *al.* l'emploient en vue de mesurer la concentration troposphérique en acide nitrique (référence **[2])** ou en acide formique, acide acétique et acide pyruvique (référence **[3]**), tandis que Keene et *al.* l'utilisent dans le but de doser les gaz chlorés inorganiques présents dans l'air marin (référence **[4]**) en utilisant une solution aqueuse alcaline pour extraire et concentrer Cl₂ et une partie de HOCl, et une solution aqueuse acide pour extraire et concentrer HCl, NOCl, ClNO₂ et ClNO₃.

Il ressort de ce qui précède que tous les appareils proposés jusqu'à présent pour l'analyse des éléments se trouvant dans un milieu gazeux ont un usage limité, d'une part, à un type d'analyses, celles-ci étant soit immédiates, soit différées dans le temps, et, d'autre part, à un type d'éléments, ces éléments devant, en effet, satisfaire pour être pris en compte dans l'analyse, soit à une certaine taille, soit à un certain état (état gazeux par exemple), soit à certaines propriétés physico-chimiques (solubilité dans l'eau par exemple).

Or, il serait souhaitable, en particulier pour le contrôle et la surveillance de la pollution atmosphérique, de pouvoir disposer d'un appareil polyvalent, notamment en ce qu'il permet :
- de réaliser aussi bien une analyse exhaustive des éléments gazeux, solides et liquides contenus dans un milieu gazeux, qu'une analyse ciblée sur une famille d'éléments, voire sur un élément de cette famille ; et
- d'effectuer aussi bien cette analyse en temps réel, de manière à pouvoir servir de système d'alerte, que de manière différée dans le temps.

Il serait, de plus, souhaitable que cet appareil soit utilisable quel que soit le lieu où se situe le milieu gazeux devant être analysé, en étant facilement transportable et autonome.

L'invention a justement pour objet un appareil qui permet d'extraire des éléments gazeux, liquides et/ou solides du milieu gazeux dans lequel ils se trouvent et de concentrer ces éléments dans un milieu liquide, par nébulisation de ce milieu liquide au moyen du milieu gazeux et condensation des gouttelettes de milieu liquide formant le brouillard produit par cette nébulisation, et qui satisfait à toutes ces exigences.

### EXPOSÉ DE L'INVENTION

L'appareil selon l'invention comprend :
- une première enceinte de nébulisation et de condensation, qui présente une partie supérieure et une partie inférieure destinée à contenir le milieu liquide, et qui est munie d'un conduit d'amenée du milieu gazeux, de moyens pour nébuliser le milieu liquide, ainsi que d'un premier conduit d'évacuation du milieu gazeux ;
- des moyens de mise en dépression ou en surpression de l'intérieur de la première enceinte, pour permettre au milieu gazeux de pénétrer dans cette enceinte, d'y circuler et d'en être évacué, en un flux continu ;
et est caractérisé en ce qu'il comprend de plus :
- au moins une deuxième enceinte de condensation, cette deuxième enceinte étant reliée au conduit d'évacuation du milieu gazeux de la première enceinte et étant munie d'un deuxième conduit d'évacuation du milieu gazeux ; et
- des moyens pour refroidir cette deuxième enceinte.

Ainsi, l'appareil selon l'invention a pour caractéristiques de comprendre au moins deux enceintes distinctes :
- une première enceinte qui est destinée à servir, en condition de fonctionnement de l'appareil, à la fois à nébuliser le milieu liquide par le milieu gazeux de manière à obtenir un brouillard formé de fines gouttelettes de ce milieu liquide en suspension dans le milieu gazeux, ainsi qu'à condenser une partie de ces gouttelettes, par coalescence desdites gouttelettes sur une surface mouillée ; et
- une deuxième enceinte qui est reliée à la première enceinte tout en étant située en aval de celle-ci par rapport au sens de circulation du flux gazeux, qui est réfrigérée et qui sert, elle, à condenser les gouttelettes de milieu liquide ne s'étant pas condensées dans la première enceinte, cette condensation complémentaire étant obtenue par contact de ces gouttelettes avec une surface froide.

Par cette double condensation, l'appareil selon l'invention offre la possibilité d'extraire des éléments gazeux, liquides et/ou solides présents dans un milieu gazeux et de les concentrer dans un milieu liquide, par la technique d'extraction-concentration par nébulisation, mais en utilisant, non seulement de l'eau ou une solution aqueuse comme milieu liquide, mais également un solvant organique, un mélange de solvants organiques formant un azéotrope ou encore un mélange eau/solvant(s) organique(s) formant un azéotrope et ce, sans risque qu'une partie de ce ou ces solvants organiques ne se perde par évaporation au cours de l'extraction-concentration, ce qui aurait pour effet de fausser les résultats de l'analyse de ces éléments.

Ainsi, l'appareil selon l'invention permet d'employer un milieu liquide parfaitement adapté aux propriétés de solubilité des éléments présents dans le milieu gazeux et que l'on souhaite détecter ou doser, et de réaliser aussi bien une extraction-concentration ciblée, c'est-à-dire limitée, par exemple, aux seuls éléments hydrosolubles ou, au contraire, à ceux qui ne sont que peu ou pas solubles dans l'eau, qu'une extraction-concentration exhaustive des éléments se trouvant dans le milieu gazeux.

Le ou les solvants formant le milieu liquide peuvent être choisis parmi de très nombreux solvants, pour autant qu'ils satisfassent aux conditions suivantes : présenter une tension de vapeur peu élevée pour faciliter leur condensation ; être exempts de toute contamination par des éléments identiques à ceux dont on souhaite effectuer l'analyse ; et, lorsqu'ils sont destinés à être utilisés en mélange, être miscibles entre eux pour que le milieu liquide soit homogène, et former un azéotrope.

Par souci de commodité, dans ce qui suit :
- la condensation des gouttelettes ou d'une partie des gouttelettes formant le brouillard produit par la nébulisation est plus simplement appelée condensation du brouillard ou d'une partie du brouillard ;
- la condensation résultant de la coalescence de ces gouttelettes sur une surface mouillée est plus simplement appelée condensation par coalescence, tandis que
- la condensation résultant du contact desdites gouttelettes avec une surface froide est plus simplement appelée condensation thermique.

Conformément à l'invention, le conduit d'amenée du milieu gazeux de la première enceinte ayant une première extrémité située hors de cette première enceinte et une deuxième extrémité logée dans cette première enceinte, les moyens pour nébuliser le milieu liquide comprennent :
- une buse de nébulisation qui est située au niveau de la deuxième extrémité de ce conduit et qui comporte au moins un orifice ; et
- un tube de nébulisation muni de deux ouvertures : une première ouverture qui est située dans la partie inférieure de la première enceinte, et une deuxième ouverture qui affleure l'orifice de la buse de nébulisation.

Au sens de la présente invention, on entend par buse de nébulisation, tout élément comportant au moins un orifice et qui, en étant situé au niveau de la deuxième extrémité du conduit d'amenée du milieu gazeux de la première enceinte, est apte, en condition de fonctionnement de l'appareil, à augmenter la vitesse à laquelle le flux gazeux est libéré dans la première enceinte par rapport à la vitesse à laquelle il s'écoule dans la partie du conduit située en amont de cet élément, de manière à induire, par effet Venturi, une aspiration, dans le tube de nébulisation, du milieu liquide situé dans la partie inférieure de la première enceinte, et la libération de ce milieu liquide par la deuxième ouverture que comporte ce tube et qui affleure l'orifice dudit élément.

Conformément à l'invention, la buse de nébulisation peut être formée par une réduction progressive de la section du conduit d'amenée du milieu gazeux de la première enceinte ou par une réduction séquentielle de cette section comme, par exemple, une série d'étranglements.

En variante, elle peut également être constituée d'une pièce rapportée, par exemple, par vissage ou encliquetage, sur la deuxième extrémité du conduit d'amenée du milieu gazeux de la première enceinte. Dans ce cas, il est possible d'équiper l'appareil d'un ensemble de buses interchangeables, se différenciant les unes des autres par le nombre d'orifices et/ou la taille de ces orifices, et permettant d'adapter au mieux la vitesse de libération du flux gazeux dans la première enceinte à la viscosité du milieu liquide et d'obtenir, ainsi, une optimisation de l'effet Venturi.

Dans un premier mode de réalisation préféré de l'appareil selon l'invention, l'orifice de la buse de nébulisation est orienté vers la partie supérieure de la première enceinte, et la deuxième ouverture du tube de nébulisation est située immédiatement au-dessus de cet orifice.

Dans ce premier mode de réalisation, la première enceinte est, de préférence, composée de trois parties :
- un réservoir, qui forme la partie inférieure de cette première enceinte et qui est destiné à contenir le milieu liquide ;
- une chambre de nébulisation, qui forme sa partie intermédiaire et dans laquelle sont logés l'orifice de la buse de nébulisation et la deuxième ouverture du tube de nébulisation ; et
- un dôme de condensation, qui forme sa partie supérieure.

Par ailleurs, la deuxième enceinte présentant une base et un sommet, le premier conduit d'évacuation du milieu gazeux est, de préférence, un conduit à un coude qui relie la chambre de nébulisation de la première enceinte à la base de la deuxième enceinte, de sorte que l'axe vertical de la deuxième enceinte soit nettement décalé par rapport à l'axe vertical de la première enceinte. Idéalement, la jonction entre ce conduit et la chambre de nébulisation se situe sensiblement à la même hauteur ou à une hauteur inférieure à celle où se trouvent l'orifice de la buse de nébulisation et l'ouverture du tube de nébulisation.

Ainsi, en condition de fonctionnement de l'appareil, la libération du milieu liquide juste au-dessus de l'orifice de la buse de nébulisation - qui libère lui-même le milieu gazeux sous forme d'un flux - génère la formation, dans la chambre de nébulisation de la première enceinte, d'un brouillard formé de fines gouttelettes de milieu liquide en suspension dans le milieu gazeux et qui, en assurant un contact intime entre le milieu liquide et le milieu gazeux, permet aux éléments gazeux, liquides et/ou solides présents dans ce milieu gazeux de se dissoudre dans le milieu liquide et d'être ainsi transférés dudit milieu gazeux vers ledit milieu liquide.

Compte tenu de l'orientation de l'orifice de la buse de nébulisation, ce brouillard monte vers le dôme de condensation, où il se condense partiellement par coalescence, la surface mouillée étant dans ce cas la surface de la paroi du dôme de condensation. Ainsi, des gouttes se forment sur la paroi de ce dôme, qui s'écoulent ensuite par gravité le long de cette paroi jusqu'à atteindre le réservoir formant la partie inférieure de la première enceinte.

Simultanément, en raison de la dépression ou de la surpression qui règne dans la première enceinte (et, par voie de conséquence, dans la deuxième enceinte puisque celles-ci sont reliées l'une à l'autre), le brouillard, qui ne s'est pas condensé dans la première enceinte, s'échappe de cette dernière par le premier conduit d'évacuation du milieu gazeux et pénètre dans la deuxième enceinte où il subit une condensation thermique. Là également, cette condensation se traduit par la formation de gouttes qui s'écoulent par gravité dans le premier conduit d'évacuation du milieu gazeux, puis le long de la portion de la paroi de la première enceinte qui sépare ce conduit du réservoir de cette première enceinte, et rejoignent ce réservoir.

Ainsi, au fur et à mesure que le milieu liquide contenu dans le réservoir de la première enceinte est nébulisé, ce réservoir est alimenté en milieu liquide, à la fois par les gouttes qui se forment dans le dôme de condensation de la première enceinte et par celles qui se forment dans la deuxième enceinte, ce qui permet de réaliser la nébulisation en continu et de concentrer progressivement, dans le milieu liquide, les éléments gazeux, liquides et solides initialement présents dans le milieu gazeux, aussi longtemps que désiré.

Par ailleurs, la disposition "décalée" de la deuxième enceinte par rapport à la première enceinte permet de réduire la vitesse des gouttelettes formées par la nébulisation ; la circulation de ces gouttelettes dans la deuxième enceinte s'effectue alors à vitesse plus réduite, ce qui permet d'éviter leur expulsion directe hors de cette enceinte, d'augmenter les durées de contact avec les parties froides de la deuxième enceinte et d'améliorer, de ce fait, la condensation du brouillard dans ladite deuxième enceinte.

Dans un deuxième mode de réalisation préféré de l'appareil selon l'invention, l'orifice de la buse de nébulisation est orienté vers la partie inférieure de la première enceinte, et la deuxième ouverture du tube de nébulisation est située immédiatement au-dessous de cet orifice.

Dans ce deuxième mode de réalisation préféré, la première enceinte est, de préférence, composée de deux parties :
- un réservoir, qui forme la partie inférieure de cette première enceinte et qui est destiné à contenir le milieu liquide, lequel réservoir a un fond dont la surface est inférieure à une section droite de ce réservoir, cette section droite affleurant la surface du milieu liquide en condition de fonctionnement de l'appareil ; et
- une chambre de nébulisation, qui forme la partie supérieure de l'appareil et dans laquelle sont logés l'orifice de la buse de nébulisation et la deuxième ouverture du tube de nébulisation.

Plus particulièrement, on préfère que le réservoir ait une forme allant en s'évasant du bas vers le haut comme, par exemple, une forme tronconique.

Dans ce deuxième mode de réalisation préféré, la chambre de nébulisation comporte avantageusement deux parois : une paroi extérieure sur laquelle vient se raccorder le premier conduit d'évacuation du milieu gazeux, et une paroi intérieure qui est située entièrement au-dessus et à distance du réservoir, cette paroi intérieure divisant la chambre de nébulisation pour former une partie centrale située à l'intérieur de la paroi intérieure et une partie périphérique située entre les parois extérieure et intérieure, la deuxième ouverture du tube de nébulisation et l'orifice de la buse de nébulisation étant logés dans ladite partie centrale.

Par ailleurs, la seconde enceinte présentant une base et un sommet, le premier conduit d'évacuation du milieu gazeux est, de préférence, un conduit à un coude qui relie la chambre de nébulisation de la première enceinte à la base de la deuxième enceinte, de sorte que, là également, l'axe vertical de la deuxième enceinte soit décalé par rapport à l'axe vertical de la première enceinte. Idéalement, la jonction entre ce conduit et la chambre de nébulisation se situe sensiblement à la même hauteur ou à une hauteur supérieure à celle où se trouvent l'orifice de la buse de nébulisation et l'ouverture du tube de nébulisation.

Ainsi, en condition de fonctionnement de l'appareil, le brouillard produit par la libération du milieu liquide juste au-dessous de l'orifice de la buse de nébulisation prend naissance dans la partie centrale de la chambre de nébulisation de la première enceinte.

Compte tenu de l'orientation de l'orifice de la buse de nébulisation, ce brouillard descend vers le réservoir, où il se condense partiellement par coalescence, la surface mouillée étant, dans ce cas, essentiellement la surface du milieu liquide contenu dans ce réservoir.

Simultanément, de par la dépression ou la surpression qui règne dans la première enceinte, le brouillard, qui ne s'est pas condensé, remonte dans la partie périphérique de la chambre de nébulisation et s'échappe de celle-ci par le premier conduit d'évacuation du milieu gazeux, avant de pénétrer dans la deuxième enceinte où il subit une condensation thermique comme précédemment décrit.

Le réservoir de la première enceinte est donc alimenté continuellement en milieu liquide, à la fois par les gouttes qui se forment à la surface du milieu liquide contenu dans ce réservoir et par celles qui se forment dans la deuxième enceinte.

Avantageusement, la première enceinte comprend un élément de stabilisation de la surface du milieu liquide, et qui est prévu pour se situer au-dessous et à faible distance (quelques mm) de cette surface en condition de fonctionnement de l'appareil - cette distance devant être optimisée en fonction de la nature du milieu liquide -, tout en laissant passer les gouttes issues de la condensation du brouillard.

Pour ce faire, l'élément de stabilisation est, par exemple, un élément rigide et de faible épaisseur tel qu'une grille constituée ou revêtue d'un matériau inerte vis-à-vis des éléments susceptibles d'être extraits du milieu gazeux et apte à résister aux éventuels effets corrosifs de ces éléments et des solvants organiques, du type polyéthylène ou Téflon^{®}, qui présente une section droite sensiblement plus faible que la section droite du réservoir affleurant la surface du milieu liquide en condition de fonctionnement de l'appareil, et qui est éventuellement muni d'éléments de type flotteurs permettant de le maintenir à la même distance de cette surface quelles que soient les variations de hauteur auxquelles celle-ci est soumise lors de l'utilisation de l'appareil.

Quel que soit le mode de réalisation de l'appareil selon l'invention, les moyens pour refroidir la deuxième enceinte sont, de préférence, une cellule à effet Peltier, une telle cellule permettant, en effet, d'assurer un refroidissement très efficace sans utiliser de gaz fluorocarbonés comme le Fréon^{®}.

Toutefois, il est bien entendu possible de refroidir l'enceinte par d'autres systèmes frigorifiques, et notamment par un système à compression d'un fluide frigorigène.

Conformément à l'invention, la deuxième enceinte peut être vide, auquel cas la surface froide sur laquelle le brouillard est susceptible de se condenser est au mieux la surface de la paroi de cette enceinte. Aussi préfère-t-on que la deuxième enceinte contienne un garnissage.

Au sens de la présente invention, on entend par garnissage, un ensemble d'éléments constitués ou revêtus d'un matériau inerte vis-à-vis des éléments susceptibles d'être extraits du milieu gazeux et apte à résister aux éventuels corrosifs de ces éléments et des solvants organiques, qui, une fois placés dans la deuxième enceinte, ont pour effet d'augmenter la surface froide sur laquelle le brouillard est susceptible de se condenser en condition de fonctionnement de l'appareil et, partant, d'optimiser la condensation de ce brouillard. Un tel garnissage consiste, par exemple, en des billes de Téflon^{®}, des billes en acier inoxydable ou des anneaux de Raschig.

De préférence, la partie inférieure de la première enceinte est munie d'au moins un système pour la détection ou le dosage des éléments gazeux, liquides et/ou solides extraits du milieu gazeux et concentrés dans le milieu liquide en condition de fonctionnement de l'appareil.

La présence d'un tel système offre, en effet, la possibilité d'identifier ou de doser les éléments présents dans le milieu gazeux, aussi bien au fur et à mesure qu'ils sont extraits de ce milieu et concentrés dans le milieu liquide, qu'au terme de l'opération d'extraction-concentration de ces éléments.

De plus, dans ce dernier cas, l'analyse des éléments peut être réalisée en utilisant, soit le système de détection et de dosage de l'appareil, soit les services d'un laboratoire d'analyses, après recueil du milieu liquide, soit encore les deux dans le cas où l'on désire, par exemple, faire contrôler les résultats obtenus avec l'appareil par un laboratoire d'analyses.

Ainsi, l'appareil selon l'invention est parfaitement adapté à servir de système d'alerte si on le souhaite, par exemple pour le contrôle et la surveillance de la pollution atmosphérique. Dans les autres cas, il permet de minimiser le temps nécessaire à la réalisation d'analyses d'éléments présents dans un milieu gazeux.

Ce système de détection ou de mesure peut notamment consister en :
- un détecteur optique constitué d'une diode et d'une cellule photoélectrique permettant d'émettre et d'analyser un rayon lumineux d'une longueur d'onde donnée qui traverse la partie inférieure de la première enceinte grâce à deux hublots qu'elle comporte ;
- un spectrophotomètre ou un spectrofluorimètre relié aux deux hublots de la cuve par deux fibres optiques ; ou encore
- une sonde électrochimique plongée dans la partie inférieure de la première enceinte ;
ces différents moyens pouvant être combinés.

Afin de faciliter le recueil du milieu liquide en fin d'opération d'extraction-concentration, la partie inférieure de la première enceinte est, de préférence, amovible.

Plus généralement, la première enceinte et la deuxième enceinte sont démontables et les parties qui les constituent sont, dans une forme assemblée de ces enceintes, raccordées entre elles de façon étanche, par exemple, par vissage, encliquetage, emboîtement ou autre. Ce raccordement peut être effectué par des moyens intégrés auxdites parties (par exemple, des filetages dans le cas d'un assemblage par vissage) ou, au contraire, par des moyens rapportés sur elles comme des raccords ou des bagues de serrage. L'étanchéité est, elle, obtenue par la présence de joints au niveau des zones de raccordement tels que des joints toriques en Téflon^{®}.

Cette disposition permet, en effet, de procéder aisément, entre deux opérations d'extraction-concentration, à un lavage de la paroi de la première enceinte et/ou de la paroi de la deuxième enceinte et des différents éléments qui sont logés dans ces enceintes, et, partant, de supprimer tout risque de contamination du milieu liquide utilisé au cours d'une opération d'extraction-concentration par des traces résiduelles d'éléments ayant été extraits et concentrés au cours d'une opération d'extraction-concentration précédente, une telle contamination étant de nature à entacher la validité des résultats de l'analyse.

Conformément à l'invention, l'appareil comprend, préférentiellement, des moyens de mise en dépression de l'intérieur de la première enceinte, lesquels sont avantageusement une pompe aspirante volumétrique qui est reliée au deuxième conduit d'évacuation du milieu gazeux.

Par ailleurs, il est muni d'un système d'alimentation en énergie électrique qui comprend, avantageusement, à la fois des moyens de raccordement à une source d'énergie électrique extérieure (réseau électrique, batteries extérieures, ...) tel qu'un câble de connexion, et des moyens d'alimentation en énergie électrique propres à lui permettre de fonctionner de manière autonome comme, par exemple, des batteries, des accumulateurs rechargeables ou analogues.

Dans un mode de réalisation particulièrement préféré de l'appareil selon l'invention, celui-ci se présente sous la forme d'une structure compacte, portable ou tractable par une seule personne du type sac à dos, valise ou mallette, propre à permettre son transport et son utilisation quel que soit le lieu où se situe le milieu gazeux devant être analysé.

Outre les avantages précédemment mentionnés, l'appareil selon l'invention présente encore de nombreux autres avantages, et notamment de permettre la réalisation d'analyses très performantes, en particulier en termes de sensibilité, d'être simple à utiliser, et de pouvoir être réalisé, si on le souhaite, sous une forme compacte et autonome, le rendant transportable et utilisable sur tout type de site.

L'invention a aussi pour objet un procédé pour extraire des éléments gazeux, liquides et/ou solides d'un milieu gazeux et les concentrer dans un milieu liquide, par nébulisation de ce milieu liquide au moyen du milieu gazeux et condensation des gouttelettes de milieu liquide formant le brouillard produit par cette nébulisation, lequel procédé est caractérisé en ce que lesdites gouttelettes sont soumises à une condensation par coalescence sur une surface mouillée et à une condensation par contact avec une surface froide, et en ce que la nébulisation et la condensation par coalescence sur une surface mouillée sont réalisées dans une première enceinte tandis que la condensation par contact avec une surface froide est réalisée dans une deuxième enceinte, les première et deuxième enceintes étant distinctes l'une de l'autre; mais reliées l'une à l'autre.

De manière particulièrement préférée, la condensation des gouttelettes par contact avec une surface froide est réalisée dans une enceinte réfrigérée et contenant un garnissage.

Conformément à l'invention, le milieu liquide comprend un ou plusieurs solvants choisis parmi l'eau, les solvants organiques et leurs mélanges.

Outre les dispositions qui précèdent, l'invention comprend encore d'autres dispositions qui ressortiront du complément de description qui suit, qui se rapporte à des exemples de réalisation d'un appareil d'extraction-concentration conforme à l'invention et qui se réfère aux dessins annexés.

Il va de soi, toutefois, que ce complément de description n'est donné qu'à titre d'illustration de l'objet de l'invention et ne constitue en aucune manière une limitation de cet objet.

### BRÈVE DESCRIPTION DES DESSINS

La figure 1 est un schéma de principe d'un exemple de réalisation d'un appareil d'extraction-concentration conforme à l'invention, dans lequel celui-ci se présente sous une forme compacte, adaptée à être portée par une seule personne.
La figure 2 est une représentation schématique d'une partie de l'appareil montré sur la figure 1, vue en coupe transversale.
La figure 3 est une représentation schématique d'une variante de réalisation de la partie de l'appareil montrée sur la figure 2, vue en coupe transversale.

### EXPOSÉ DÉTAILLÉ D'EXEMPLES DE RÉALISATION D'UN APPAREIL CONFORME A L'INVENTION

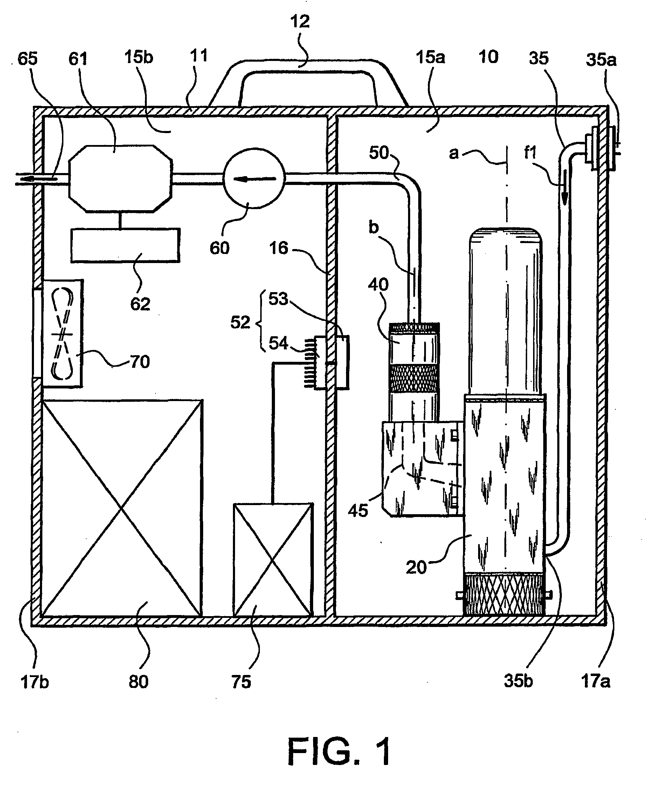

On se réfère tout d'abord à la figure 1 qui correspond à un schéma de principe d'un exemple de réalisation d'un appareil d'extraction-concentration 10 conforme à l'invention, dans lequel ce dernier se présente sous une forme compacte, plus précisément sous la forme d'une mallette 11 prévue pour être portée par une seule personne grâce à une poignée 12 qu'elle comporte sur sa face externe supérieure.

Comme visible sur cette figure, l'intérieur de la mallette 11, qui peut être constituée d'un métal léger du type alliage à base d'aluminium, ou d'un plastique rigide du type polypropylène, est divisé en deux compartiments, respectivement 15a et 15b, par une cloison verticale 16.

Le compartiment 15a renferme :
- une première enceinte 20, de grand axe a vertical, qui est destinée à assurer à la fois la nébulisation d'un milieu liquide convenablement choisi en fonction des éléments gazeux, liquides et/ou solides que l'on cherche à extraire du milieu gazeux et à concentrer, ainsi que la condensation par coalescence d'une partie du brouillard ainsi formé ;
- un conduit 35, qui sert à amener le milieu gazeux dans la première enceinte 20 et qui, pour ce faire, a une extrémité 35a qui est située hors de la mallette 11 et une extrémité 35b qui est située dans la première enceinte 20 ;
- une deuxième enceinte 40, également de grand axe b vertical, dont la fonction est d'assurer la condensation thermique du brouillard ne s'étant pas condensé dans la première enceinte ;
- un conduit 45, qui relie les enceintes 20 et 40 l'une à l'autre, et qui sert notamment à évacuer le milieu gazeux hors de la première enceinte 20 ; et
- un conduit 50, qui sert à évacuer le milieu gazeux hors de la deuxième enceinte 40 et qui, pour ce faire, relie cette enceinte à une pompe aspirante 60 située dans le compartiment 15b, en traversant la cloison 16.

Le compartiment 15a renferme également un dispositif dont la fonction est de refroidir la deuxième enceinte 40 de sorte que la température interne de cette enceinte soit, par exemple, de l'ordre de 5 à 10°C lorsque la température ambiante est de 25°C.

Dans le mode de réalisation illustré sur la figure 1, ce dispositif est une cellule à effet Peltier 52 dont la face, qui est destinée à servir de face froide 53 en condition de fonctionnement de l'appareil 10, se situe au contact de la cloison 16 et est dirigée vers l'intérieur du compartiment 15a, tandis que la face, qui est destinée à servir de face chaude 54, se situe dans le compartiment 15b.

Dans certaines configurations, notamment pour l'utilisation de solvants légers, il est possible d'établir un pont thermique entre la face froide 53 de la cellule à effet Peltier et la deuxième enceinte 40 à l'aide d'un bloc d'un matériau thermiquement conducteur, par exemple en cuivre (non représenté sur la figure 1).

Afin d'augmenter l'efficacité de cette cellule, les parois du compartiment 15a sont avantageusement recouvertes d'un matériau (non représenté sur la figure 1) apte à assurer une isolation thermique de ce compartiment comme, par exemple, une mousse de polyuréthanne.

Le compartiment 15b renferme, lui :
- la pompe aspirante 60, qui est, de préférence, une pompe volumétrique et dont la fonction est de mettre en dépression l'intérieur des enceintes 20 et 40 et de permettre, ainsi, au milieu gazeux de pénétrer dans ces enceintes, d'y circuler et d'en être évacué en un flux continu ;
- un conduit 65, dont la fonction est d'évacuer le milieu gazeux hors de la mallette 11 et qui, pour ce faire, relie la pompe aspirante 60 à l'extérieur de la mallette 11 en traversant la paroi latérale 17b de cette dernière ;
- un débitmètre 61 couplé à la pompe aspirante 60, qui sert à mesurer le débit du flux gazeux traversant les enceintes 20 et 40 ;
- un compteur 62 couplé au débitmètre 61, qui permet, en transformant les valeurs de débit instantanées mesurées par ce dernier en des valeurs cumulées, de connaître le volume de milieu gazeux traité pour une période de temps donnée ;
- un bloc de ventilation 70, qui sert à évacuer hors du compartiment 15b la chaleur dégagée par la face chaude de la cellule à effet Peltier 52 dans ce compartiment ;
- des circuits électroniques programmés (non représentés sur la figure 1), qui sont gérés par une unité de contrôle et de commande 75 pour le pilotage et la régulation du fonctionnement de l'appareil 10 ; et
- un système d'alimentation en énergie électrique 80, qui est destiné à alimenter la cellule à effet Peltier 52, la pompe aspirante 60, le débitmètre 61, le compteur 62, le bloc de ventilation 70, les circuits électroniques programmés et l'unité centrale de contrôle et de commande 75, ce système d'alimentation comprenant avantageusement des moyens permettant de raccorder l'appareil à un réseau électrique ou à des batteries externes tel qu'un câble de connexion, et, d'autre part, des moyens du type batteries, accumulateurs rechargeables ou analogues, le rendant apte à fonctionner de façon autonome.

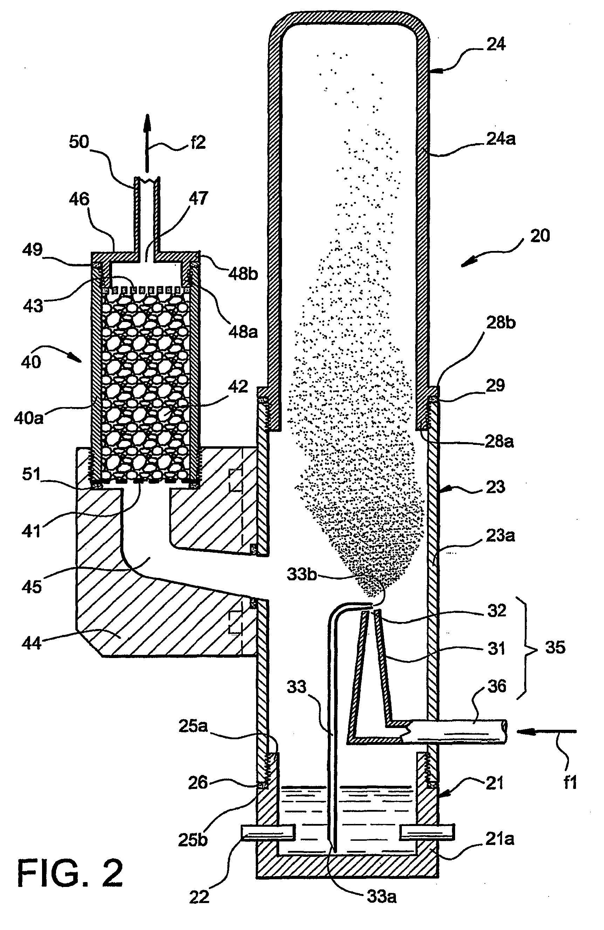

On se réfère à présent à la figure 2 qui représente, sous une forme schématique, les éléments de l'appareil 10 présents dans le compartiment 15a, à l'exception toutefois de la face froide 53 de la cellule à effet Peltier 52.

On retrouve donc, sur cette figure, la première enceinte 20, le conduit 35 servant à amener le milieu gazeux dans cette première enceinte, la deuxième enceinte 40, le conduit 45 reliant les deux enceintes 20 et 40, ainsi que le conduit 50 servant à évacuer le milieu gazeux hors de la deuxième enceinte.

Comme visible sur la figure 2, la première enceinte 20, qui se compose de trois parties, lesquelles sont, de préférence, à section droite circulaire et sont aptes à être désassemblées et assemblées à volonté par vissage. Ces trois parties sont de bas en haut :
- un réservoir 21, qui forme la partie inférieure de cette première enceinte et qui est rempli, avant chaque opération d'extraction-concentration, d'un volume prédéterminé du milieu liquide choisi pour réaliser cette opération ;
- une chambre de nébulisation 23, qui forme la partie intermédiaire de cette première enceinte ; et
- un dôme de condensation 24, qui forme la partie supérieure de cette première enceinte.

Le réservoir 21, la chambre de nébulisation 23 et le dôme de condensation 24 présentent chacun une paroi cylindrique, respectivement 21a, 23a et 24a, la paroi 21a du réservoir 21 étant fermée à son extrémité inférieure, tandis que la paroi 24a du dôme de condensation 24 est fermée à son extrémité supérieure.

A sa partie supérieure, la paroi 21a du réservoir 21 est munie d'une collerette interne 25a, qui s'étend vers le haut et dont la surface externe est munie d'un filetage qui s'ajuste à un filetage situé sur la surface interne de la paroi 23a de la chambre de nébulisation 23, ainsi que d'un rebord externe périphérique 25b sur lequel repose l'extrémité inférieure de la paroi 23a de cette chambre. Entre le rebord 25b et l'extrémité inférieure de la paroi 23a de la chambre de nébulisation 23, est placé un premier joint torique 26 propre à assurer une étanchéité entre ce réservoir et cette chambre.

De manière similaire, à sa partie inférieure, la paroi 24a du dôme de condensation 24 est munie d'une collerette interne 28a, qui s'étend vers le bas et dont la surface externe est munie d'un filetage qui s'ajuste à un filetage situé sur la surface interne de la paroi 23a de la chambre de nébulisation 23, ainsi que d'un rebord externe périphérique 28b qui recouvre l'extrémité supérieure de la paroi 23a de cette chambre. Entre le rebord 28b de la paroi 24a du dôme de condensation 24 et l'extrémité inférieure de la paroi 23a de la chambre de nébulisation 23, est placé un deuxième joint torique 29.

Le réservoir 21 est muni d'un système 22 de détection et de dosage partiellement intégré dans l'épaisseur de sa paroi.

La première enceinte 20 comprend aussi des moyens de nébulisation qui comprennent, d'une part, une buse de nébulisation 31, munie d'un orifice 32, dont la fonction est d'augmenter la vitesse à laquelle le milieu gazeux est libéré dans la chambre de nébulisation 23 par rapport à la vitesse d'écoulement de ce milieu dans le conduit 35 en condition de fonctionnement de l'appareil 10, et, d'autre part, un tuyau de nébulisation 33 dont la fonction est d'amener et de libérer le milieu liquide situé dans le réservoir 21 juste au-dessus de l'orifice 32 de la buse de nébulisation 31.

Dans l'exemple de réalisation montré sur la figure 2, la buse de nébulisation 31 est formée par une réduction progressive de la section du conduit 35.

Aussi, dans cet exemple de réalisation, ce conduit comprend-t-il :
- un premier segment 36 (partiellement représenté sur la figure 2), de section constante, qui, d'une part, est relié à l'extérieur de la mallette 11 et, d'autre part, traverse la paroi 23a de la chambre de nébulisation 23, et s'étend jusqu'à sensiblement la partie médiane de cette chambre ; et
- un deuxième segment de forme tronconique, qui correspond à la buse de nébulisation 31 et qui s'étend verticalement dans la chambre de nébulisation 23 en direction du dôme de condensation 24, son extrémité libre 32 étant orientée vers ce dôme de condensation.

Le tuyau de nébulisation 33, qui présente une ouverture, respectivement 33a et 33b, à chacune de ses extrémités, est disposé verticalement dans la première enceinte, tout en étant courbé à sa partie supérieure, de sorte que son ouverture 33a puisse plonger dans le milieu liquide contenu dans le réservoir 21 en condition de fonctionnement de l'appareil 10, tandis que son ouverture 33b se situe juste au-dessus de l'extrémité libre 32 de la buse de nébulisation 31.

L'ouverture 33b du tuyau de nébulisation présente une section sensiblement inférieure à celle présentée par le reste de ce tuyau, cette différence de section étant destinée à augmenter, en condition de fonctionnement de l'appareil 10, la vitesse à laquelle le milieu liquide est libéré par cette ouverture par rapport à la vitesse à laquelle ce même milieu s'écoule dans ledit tuyau.

Comme visible sur la figure 2, la deuxième enceinte 40 présente une paroi cylindrique 40a ouverte à ses deux extrémités.

Au niveau de son extrémité inférieure, la paroi 40a est munie d'un élément circulaire 41, qui s'étend sur toute la section interne de la deuxième enceinte 40 et qui est percé d'une multitude de trous, par exemple d'un diamètre de 2 à 3 mm. Cet élément forme la base de la deuxième enceinte 40 et les trous qu'il comporte sont prévus pour laisser passer, en condition de fonctionnement de l'appareil 10, le brouillard provenant de la première enceinte 20 ainsi que les gouttes qui se forment dans la deuxième enceinte 40 de par la condensation thermique de ce brouillard, tout en retenant le garnissage 42 que contient cette deuxième enceinte.

Ce garnissage est également retenu, à la partie supérieure de la deuxième enceinte 40, par un filtre 43, de porosité avantageusement comprise entre 0,2 et 0,5 µm, qui offre une ultime surface de condensation aux gouttelettes de milieu liquide éventuellement encore présentes dans le milieu gazeux juste avant que celui-ci ne quitte la deuxième enceinte 40 par le conduit 50.

A sa partie inférieure, la deuxième enceinte 40 est logée et maintenue par vissage dans un bloc support 44, entourant le conduit 45, ce conduit reliant, en effet, la base de la deuxième enceinte 40 à la paroi 23a de la chambre de nébulisation 23 de la première enceinte 20, sensiblement à hauteur de l'orifice 32 de la buse de nébulisation 31 et de l'ouverture 33b du tuyau de nébulisation 33. Un premier joint torique 51 est disposé entre l'extrémité inférieure de la paroi 40a et le bloc support 44.

La deuxième enceinte 40 comprend aussi un couvercle 46 qui forme le sommet de cette enceinte et qui est muni d'un orifice 47 au niveau duquel vient se raccorder le conduit 50 (partiellement représenté sur la figure 2) servant à évacuer le milieu gazeux hors de ladite enceinte.

A sa partie inférieure, le couvercle 46 comporte une collerette interne 48a s'étendant vers le bas, dont la surface externe porte un filetage qui s'ajuste à un filetage situé sur la surface interne de la paroi 40a de la deuxième enceinte 40 et dont le bord libre vient en appui sur le filtre 43. Il comporte également un rebord externe périphérique 48b qui recouvre l'extrémité supérieure de la paroi 40a de la deuxième enceinte 40. Un deuxième joint torique 49 est logé entre ce rebord et ladite extrémité.

L'extraction-concentration des éléments gazeux, liquides et/ou solides présents dans un milieu gazeux au moyen de l'appareil 10 représenté sur les figures 1 et 2 s'effectue de la manière suivante :
Après avoir rempli le réservoir 21 d'un volume prédéterminé d'un milieu liquide convenablement choisi en fonction des éléments que l'on souhaite extraire et concentrer, assemblé ce réservoir à la chambre de nébulisation 23, et actionné la cellule à effet Peltier 52, on met en marche la pompe aspirante 60, ce qui a pour effet de mettre en dépression l'intérieur des première et deuxième enceintes 20 et 40 et, partant, de créer une aspiration du milieu gazeux de l'extérieur de la mallette 11 vers la première enceinte 20 (comme illustré par la flèche f₁ sur la figure 2). Le milieu gazeux pénètre donc dans la chambre de nébulisation 23 par le conduit 35 en un flux gazeux continu dont on règle le débit au moyen du débit-mètre 61.

De par l'action conjuguée de la dépression qui règne dans la première enceinte 20 et de l'augmentation, par la buse de nébulisation 31, de la vitesse à laquelle le flux gazeux est libéré dans la chambre de nébulisation 23, le milieu liquide contenu dans le réservoir 21 est aspiré dans le tuyau de nébulisation 33 par effet Venturi et libéré par l'ouverture 33b que comporte ce tuyau à sa partie supérieure, juste au-dessus de l'orifice 32 de la buse de nébulisation 31.

Il se forme ainsi, dans la chambre de nébulisation 23, un brouillard formé de fines gouttelettes de milieu liquide en suspension dans le milieu gazeux et qui permet, par un contact intime et homogène, entre le milieu liquide et le milieu gazeux, aux éléments gazeux, liquides et/ou solides présents dans ce milieu gazeux de se dissoudre dans le milieu liquide et d'être ainsi transférés dudit milieu gazeux vers ledit milieu liquide.

Ce brouillard s'élève vers le dôme de condensation 24. Une partie de ces gouttelettes se condensent par coalescence au contact de la surface mouillée de la paroi du dôme de condensation et forment des gouttes qui s'écoulent par gravité le long de cette paroi et rejoignent, ainsi, le réservoir 21.

Simultanément, le brouillard, qui ne s'est pas condensé dans la première enceinte 20, s'échappe de cette dernière par le conduit 45, traverse l'élément cylindrique 41 et pénètre dans la deuxième enceinte 40 où les gouttelettes de milieu liquide qui le constituent se condensent au contact de la surface froide des éléments du garnissage 42 et de la paroi 40a de cette deuxième enceinte. Cette condensation se traduit également par la formation de gouttes qui s'écoulent par gravité dans le conduit 45, puis le long de la portion de la paroi 23 qui sépare ce conduit du réservoir 21, et rejoignent ce réservoir.

Ainsi, au fur et à mesure que le milieu liquide contenu dans le réservoir 21 est nébulisé, ce réservoir est alimenté en milieu liquide, à la fois par les gouttes qui se forment dans le dôme de condensation 24 et par celles qui se forment dans la deuxième enceinte 40, ce qui permet de réaliser la nébulisation en continu et de concentrer progressivement, dans le milieu liquide, les éléments gazeux, liquides et solides initialement présents dans le milieu gazeux et ce, aussi longtemps qu'on le souhaite.

Le milieu gazeux quitte, quant à lui, la deuxième enceinte 40 par le conduit 50 (comme illustré par la flèche f₂ sur la figure 2), après avoir traversé le filtre 43, épuré des éléments qui ont été extraits et concentrés dans le milieu liquide et asséché.

Pour mettre fin à l'opération d'extraction-concentration, il suffit d'arrêter la pompe aspirante 61, ce qui a pour effet immédiat de stopper l'amenée du milieu gazeux dans la première enceinte 20, l'effet Venturi, l'aspiration du milieu liquide dans le tuyau de nébulisation 33 et la génération du brouillard.

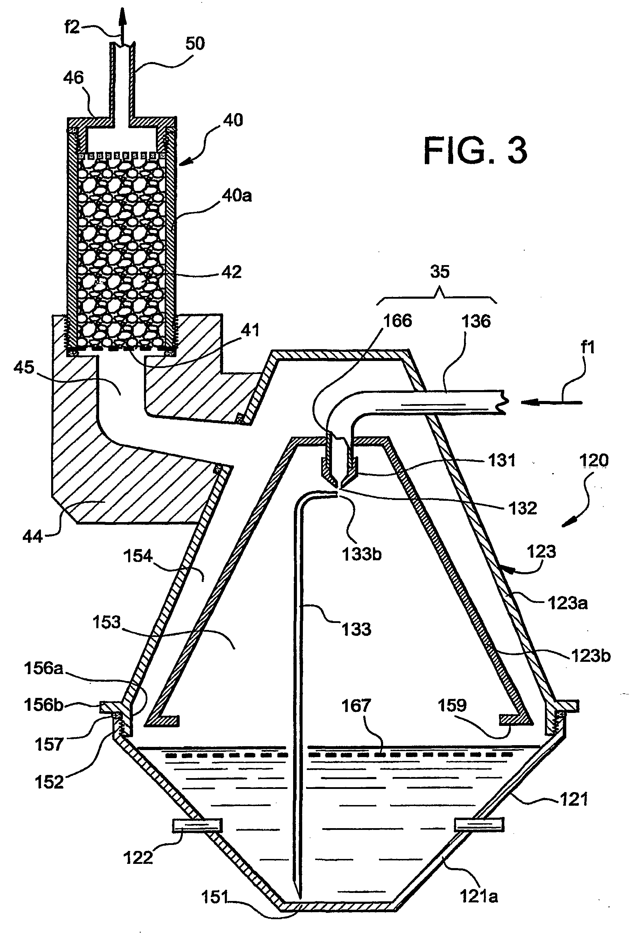

On se réfère à présent à la figure 3 qui représente, sous une forme schématique, une variante de réalisation de la partie de l'appareil 10 illustrée sur la figure 2, vue en coupe transversale, qui est particulièrement bien adaptée à l'utilisation de milieux liquides vis-à-vis desquels la paroi de la première enceinte 20 est susceptible de présenter une faible mouillabilité.

Sur la figure 3, les éléments qui sont identiques à ceux montrés sur la figure 2 portent les mêmes références que sur cette dernière.

Dans cette variante de réalisation, la première enceinte 120 ne se compose que de deux parties aptes à être désassemblées et assemblées à volonté par vissage. Celles-ci, qui présentent, de préférence, une section droite circulaire, sont :
- un réservoir 121, qui forme la partie inférieure de cette première enceinte ; et
- une chambre de nébulisation 123, qui en forme la partie supérieure.

Le réservoir 121 présente une paroi 121a formant un tronc de cône, qui est fermée à son extrémité inférieure par un fond 151 correspondant à la plus petite section de ce tronc de cône, et dans laquelle est partiellement intégré un système 122 de détection et de dosage. La paroi 121a est munie, à sa partie supérieure d'une collerette 152.

La chambre de nébulisation 123 présente deux parois : une paroi extérieure 123a et une paroi intérieure 123b, qui forment chacune un tronc de cône et qui sont toutes les deux fermées à leur extrémité supérieure, cette extrémité correspondant à la plus petite section desdits troncs de cône.

Ainsi, la chambre de nébulisation 123 est divisée en deux parties : une partie centrale 153, qui est située à l'intérieur de la paroi intérieure 123b, et une partie périphérique 154 qui est située entre cette paroi et la paroi extérieure 123a.

Cette dernière est munie, à sa partie inférieure, d'une collerette interne 156a, qui s'étend vers le bas et dont la surface externe est munie d'un filetage qui s'ajuste à un filetage situé sur la surface interne de la collerette 152 portée par la paroi 121a du réservoir 121, ainsi que d'un rebord externe périphérique 156b qui recouvre l'extrémité supérieure de cette paroi 121. Un joint torique 157, par exemple en Téflon^{®}, est disposé entre ce rebord et ladite extrémité.

La paroi intérieure 123b de la chambre de nébulisation 123 est munie, à son extrémité inférieure, d'un rebord interne périphérique 159, qui s'étend radialement en direction de la partie centrale 153 de cette chambre, suffisamment à distance de la section droite du réservoir 121 correspondant à la surface occupée par le milieu liquide, lorsque ce réservoir est en condition de remplissage maximal, pour ménager un passage entre les parties centrale 153 et périphérique 154 de la chambre de nébulisation 123 en condition de fonctionnement de l'appareil 10.

Dans la variante de réalisation illustrée sur la figure 3, le conduit 35 servant à amener le milieu gazeux dans la première enceinte 120 comprend deux segments :
- un premier segment 136 (partiellement représenté sur la figure 3) qui, d'une part, est relié à l'extérieur de la mallette 11, et, d'autre part, traverse la paroi 123a de la chambre de nébulisation 123 pour déboucher au-dessus de la partie centrale 153 de cette chambre, et s'étend jusqu'à sensiblement la partie médiane de la chambre de nébulisation 123 ; et
- un deuxième segment 166, qui s'étend verticalement en direction du réservoir 121, traverse la paroi intérieure de la chambre de nébulisation 123 pour pénétrer dans la partie centrale 153 de cette chambre et se termine par une buse de nébulisation 131, qui est fixée par vissage, emboîtement, encliquetage ou tout autre moyen, sur l'extrémité libre de ce segment et est munie d'un orifice 132 orienté vers le réservoir.

Comme dans l'exemple de réalisation illustré sur la figure 2, la première enceinte 120 comprend un tube de nébulisation 133 muni d'une ouverture, respectivement 133a et 133b, à chacune de ses extrémités. Ce tube est disposé verticalement dans la partie centrale 153 de la chambre de nébulisation 123, tout en étant courbé à sa partie supérieure, de sorte que son ouverture 133a puisse plonger dans le milieu liquide contenu dans le réservoir 121 en condition de fonctionnement de l'appareil, tandis que son ouverture 133b se situe juste au-dessous de l'orifice 132 de la buse de nébulisation 131. Là également, l'ouverture 133b du tuyau de nébulisation présente une section sensiblement inférieure à celle présentée par le reste de ce tuyau.

Comme visible sur la figure 3, la première enceinte 120 comprend une grille 167 qui est traversée par le tuyau de nébulisation 133. Cette grille, dont les ouvertures mesurent avantageusement de 0,05 à 0,5 mm, est destinée à stabiliser la surface du milieu liquide en condition de fonctionnement de l'appareil, notamment en évitant que le flux gazeux libéré par l'orifice 132 de la buse de nébulisation 131 ne crée des turbulences à la surface de ce milieu liquide.

Pour ce faire, il convient que cette grille se situe à quelques mm au-dessous de la surface du milieu liquide et que la distance qui la sépare de cette surface reste constante lorsque, après mise en fonctionnement de l'appareil 10, cette surface s'abaisse compte tenu de la nébulisation. La grille 167 présente donc une section droite sensiblement plus faible que la section droite du réservoir 121 qui affleure la surface du milieu liquide en condition de fonctionnement de l'appareil 10 et est munie d'un ou plusieurs flotteurs (non représentés sur la figure 3) qui permettent de la maintenir à distance constante de la surface du milieu liquide.

Dans la variante de réalisation représentée sur la figure 3, le conduit 45 d'évacuation du milieu gazeux et la deuxième enceinte 40 sont identiques à ceux décrits en relation avec la figure 2, à ceci près que le conduit 45 est raccordé au niveau de la partie supérieure de la première enceinte 120 et non, au niveau de sa partie intermédiaire.

Pour réaliser une extraction-concentration d'éléments gazeux, liquides et/ou solides présents dans un milieu gazeux au moyen de la variante de réalisation illustrée sur la figure 3, on procède de la même manière que précédemment décrit.

Simplement, dans ce cas, le brouillard se forme en haut de la partie centrale 153 de la chambre de nébulisation 123 de la première enceinte 120 et descend vers le réservoir 121, où une partie des gouttelettes de milieu liquide qui le constituent se condensent par coalescence au contact de la surface du milieu liquide contenu dans ce réservoir.

Simultanément, le brouillard, qui ne s'est pas condensé au contact de cette surface, s'échappe dans la partie périphérique 154 de la chambre de nébulisation 123 par le passage existant entre le rebord interne périphérique 159 de la paroi intérieure 123b de cette chambre et la surface du milieu liquide contenu dans le réservoir 121, puis dans la deuxième enceinte 40 par le conduit 45. Les gouttes qui résultent de la condensation du brouillard au contact de la surface froide des éléments du garnissage 42 et de la paroi 40a de la deuxième enceinte 40, s'écoulent par gravité dans le conduit 45, puis le long de la portion de la paroi 123a qui sépare ce conduit du réservoir 121, et rejoignent ainsi ce dernier.

Là également, le réservoir 121 de la première enceinte 120 est donc alimenté continuellement en milieu liquide, à la fois par les gouttes qui se forment à la surface du milieu liquide contenu dans ce réservoir et par celles qui se forment dans la deuxième enceinte 40.

Les différents constituants de l'appareil selon l'invention peuvent être réalisés en de nombreux matériaux, sous réserve que ces matériaux soient, d'une part, inertes vis-à-vis des éléments susceptibles d'être extraits du milieu gazeux et aptes à résister aux éventuels corrosifs de ces éléments et des solvants organiques susceptibles d'être utilisés en tant que milieu liquide, lorsqu'il s'agit de constituants appelés à être en contact avec le milieu gazeux et le milieu liquide, et, d'autre part, de résister aux contraintes mécaniques auxquelles ledit appareil est susceptible d'être soumis, lorsqu'il s'agit de constituants qui jouent un rôle de support. Il est souhaitable que ces matériaux présentent, de plus, une masse volumique peu élevée de manière à ce que l'appareil ait un poids compatible avec son transport et sa manipulation par une seule personne.

Ainsi, par exemple, les constituants destinés à être au contact du milieu gazeux et du milieu liquide pourront être réalisés en polyéthylène ou polytétrafluoroéthylène, tandis que les constituants destinés à jouer un rôle de support pourront être constitués de polypropylène ou d'un alliage à base d'aluminium.

L'invention ne se limite pas aux modes de réalisation qui viennent d'être exposés de façon détaillée.

Ainsi, par exemple, outre le fait que l'appareil peut comprendre plusieurs enceintes de condensation analogues à la deuxième enceinte 40 décrite ci-avant, par exemple montées en série, il peut également être muni, dans le cas où la première enceinte comporte un dôme de condensation, de moyens permettant de refroidir ce dôme de condensation et, partant, d'induire une condensation du brouillard dans la première enceinte, à la fois par coalescence et par effet thermique. Ceci peut être particulièrement utile lorsque la paroi du dôme de condensation présente une faible mouillabilité vis-à-vis du milieu liquide utilisé.

L'appareil peut aussi être équipé d'un circuit de refroidissement ou d'un dispositif d'assèchement (tamis moléculaire par exemple) permettant de déshydrater le milieu gazeux avant que celui-ci ne pénètre dans la première enceinte de manière à le débarrasser de la vapeur d'eau qu'il renferme. La présence d'un tel système peut s'avérer particulièrement utile dans le cas où l'on souhaite utiliser l'appareil à des températures proches ou inférieures à O°C) pour éviter que des cristaux de glace ne viennent boucher le ou les orifices de la buse de nébulisation.

Egalement, les moyens de nébulisation ne se limitent pas à ceux utilisés dans les exemples ci-avant, tous les dispositifs permettant de générer des micro-gouttelettes de liquide en présence d'un gaz étant par principe utilisables dans un appareil conforme à l'invention.

### BIBLIOGRAPHIE

[1] US-A-4,208,912
[2] Talbot et al., Journal of Geophysical Research, 95, D6, 7553-7561, 1990
[3] Talbot et al., Journal of Geophysical Research, 100, D5, 9335-9343, 1995
[4] Keene et al., Environ. Sci. Technol., 27, 866-874, 1993

## Revendications

1. Appareil (10) pour extraire des éléments gazeux, liquides et/ou solides d'un milieu gazeux et les concentrer dans un milieu liquide, par nébulisation de ce milieu liquide au moyen du milieu gazeux et condensation des gouttelettes de milieu liquide formant le brouillard produit par cette nébulisation, ledit appareil comprenant :
- une première enceinte (20, 120) pour la nébulisation et pour la condensation des gouttelettes par coalescence sur une surface mouillée, cette première enceinte présentant une partie supérieure (24, 123) et une partie inférieure (21, 121) destinée à contenir le milieu liquide, et qui est munie d'un conduit (35) d'amenée du milieu gazeux, de moyens (31, 33, 131, 133) pour nébuliser le milieu liquide, et d'un premier conduit d'évacuation (45) du milieu gazeux ;
- des moyens (60) de mise en dépression ou en surpression de l'intérieur de la première enceinte pour permettre au milieu gazeux de pénétrer dans cette première enceinte, d'y circuler et d'en être évacué, en un flux continu ;
et étant **caractérisé en ce qu'**il comprend de plus :
- au moins une deuxième enceinte (40) pour la condensation des gouttelettes par contact avec une surface froide, cette deuxième enceinte étant reliée au conduit (45) d'évacuation du milieu gazeux de la première enceinte, et étant munie d'un deuxième conduit (50) d'évacuation du milieu gazeux ; et
- des moyens (52) pour refroidir cette deuxième enceinte.

2. Appareil (10) selon la revendication 1, **caractérisé en ce que**, le conduit (35) d'amenée du milieu gazeux de la première enceinte (20, 120) ayant une première extrémité (35a) située hors de cette première enceinte et une deuxième extrémité (35b) logée dans cette première enceinte, les moyens pour nébuliser comprennent :
- une buse de nébulisation (31, 131) qui est située au niveau de la deuxième extrémité (35b) de ce conduit et qui comporte au moins un orifice (32, 132) ; et
- un tube de nébulisation (33, 133) muni de deux ouvertures (133a, 133b) : une première ouverture (133a) qui est située dans la partie inférieure de la première enceinte, et une deuxième ouverture (133b) qui affleure l'orifice (32, 132) de la buse de nébulisation (31, 131).

3. Appareil (10) selon la revendication 2, **caractérisé en ce que** la buse de nébulisation (31) est formée par une réduction de la section du conduit (35) d'amenée du milieu gazeux de la première enceinte (20).

4. Appareil (10) selon la revendication 2, **caractérisé en ce que** la buse de nébulisation (131) est constituée d'une pièce rapportée sur la deuxième extrémité (35b) du conduit (35) d'amenée du milieu gazeux de la première enceinte (120).

5. Appareil (10) selon l'une quelconque des revendications 2 à 4, **caractérisé en ce que** l'orifice (32) de la buse de nébulisation (31) est orienté vers la partie supérieure de la première enceinte (20), et la deuxième ouverture (33b) du tube de nébulisation (33) est située immédiatement au-dessus de cet orifice.

6. Appareil (10) selon l'une quelconque des revendications 2 à 5, **caractérisé en ce que** la première enceinte (20) est composée de trois parties :
- un réservoir (21) qui forme la partie inférieure de la première enceinte et qui est destiné à contenir le milieu liquide ;
- une chambre de nébulisation (23) qui forme la partie intermédiaire de la première enceinte et dans laquelle sont logés l'orifice de la buse de nébulisation (32) et la deuxième ouverture (33b) du tube de nébulisation (31) ; et
- un dôme de condensation (24) qui forme la partie supérieure de la première enceinte.

7. Appareil (10) selon la revendication 6, **caractérisé en ce que**, la deuxième enceinte (40) présentant une base (41) et un sommet (46), le premier conduit (45) d'évacuation du milieu gazeux est un conduit à un coude qui relie la chambre de nébulisation (23) de la première enceinte (20) à la base (41) de la deuxième enceinte.

8. Appareil (10) selon l'une quelconque des revendications 2 à 4, **caractérisé en ce que** l'orifice (132) de la buse de nébulisation (131) est orienté vers la partie inférieure de la première enceinte (120), et la deuxième ouverture (133b) du tube de nébulisation (133) est située immédiatement au-dessous de cet orifice.

9. Appareil (10) selon l'une quelconque des revendications 2 à 4 ou 8, **caractérisé en ce que** la première enceinte (120) est, de préférence, composée de deux parties :
- un réservoir (121) qui forme la partie inférieure de cette première enceinte et qui est destiné à contenir le milieu liquide, lequel réservoir a un fond (151) dont la surface est inférieure à une section droite de ce réservoir, cette section droite affleurant la surface du milieu liquide en condition de fonctionnement de l'appareil ; et
- une chambre de nébulisation (123) qui forme là partie supérieure de l'appareil et dans laquelle sont logés l'orifice (132) de la buse de nébulisation (131) et la deuxième ouverture (133b) du tube de nébulisation (133).

10. Appareil (10) selon la revendication 9, **caractérisé en ce que** le réservoir (123) a une forme allant en s'évasant du bas vers le haut.

11. Appareil (10) selon la revendication 9 ou la revendication 10, **caractérisé en ce que** la chambre de nébulisation (123) comporte deux parois : une paroi extérieure (123a), sur laquelle vient se raccorder le premier conduit (45) d'évacuation du milieu gazeux, et une paroi intérieure (123b), qui est située entièrement au-dessus et à distance du réservoir (121), cette paroi intérieure divisant la chambre de nébulisation pour former une partie centrale (153) située à l'intérieur de la paroi intérieure (123b) et une partie périphérique (154) située entre les parois extérieure (123a) et intérieure (123b), la deuxième ouverture (133b) du tube de nébulisation (133) et l'orifice (132) de la buse de nébulisation (131) étant logés dans ladite partie centrale.

12. Appareil (10) selon l'une quelconque des revendications 9 à 11, **caractérisé en ce que**, la deuxième enceinte (40) présentant une base (41) et un sommet (46), le premier conduit (45) d'évacuation du milieu gazeux est un conduit à un coude qui relie la chambre de nébulisation (123) de la première enceinte (120) à la base (41) de la deuxième enceinte.

13. Appareil (10) selon l'une quelconque des revendications 8 à 12, **caractérisé en ce que** la première enceinte (120) comprend un élément (167) de stabilisation de la surface du milieu liquide, cet élément étant prévu pour se situer au-dessous et à faible distance de cette surface en condition de fonctionnement de l'appareil, tout en laissant passer les gouttes issues de la condensation du brouillard.

14. Appareil selon l'une quelconque des revendications précédentes, **caractérisé en ce que** les moyens (52) pour refroidir la deuxième enceinte (40) sont une cellule à effet Peltier.

15. Appareil (10) selon l'une quelconque des revendications précédentes, **caractérisé en ce que** la deuxième enceinte (40) contient un garnissage (42).

16. Appareil (10) selon l'une quelconque des revendications précédentes, **caractérisé en ce que** la partie inférieure de la première enceinte (20, 120) est munie d'au moins un système (22, 122) pour la détection ou le dosage des éléments gazeux, liquides et/ou solides extraits du milieu gazeux et concentrés dans le milieu liquide en condition de fonctionnement de l'appareil.

17. Appareil (10) selon l'une quelconque des revendications précédentes, **caractérisé en ce que** la partie inférieure (21, 121) de la première enceinte (20, 120) est amovible.

18. Appareil selon l'une quelconque des revendications 7 ou 8 ou 12 à 17, **caractérisé en ce que** la première enceinte (20, 120) et la deuxième enceinte (40) sont démontables, et **en ce que** les parties qui les constituent sont, dans une forme assemblée de ces enceintes, raccordées entre elles de façon étanche.

19. Appareil (10) selon l'une quelconque des revendications précédentes, **caractérisé en ce qu'**il comprend des moyens (60) de mise en dépression de l'intérieur de la première enceinte (20, 120) et **en ce que** ces moyens sont une pompe aspirante qui est reliée au deuxième conduit (50) d'évacuation du milieu gazeux.

20. Appareil (10) selon l'une quelconque des revendications précédentes, **caractérisé en ce qu'**il comprend, de plus, un système (80) d'alimentation en énergie électrique comprenant des moyens de raccordement à une source d'énergie électrique extérieure et des moyens d'alimentation en énergie électrique pour son fonctionnement autonome.

21. Appareil (10) selon l'une quelconque des revendications précédentes, **caractérisé en ce qu'**il se présente sous la forme d'une structure compacte (11), portable ou tractable par une seule personne.

22. Procédé pour extraire des éléments gazeux, liquides et/ou solides d'un milieu gazeux et les concentrer dans un milieu liquide, par nébulisation de ce milieu liquide au moyen du milieu gazeux et condensation des gouttelettes de milieu liquide formant le brouillard produit par cette nébulisation, **caractérisé en ce que** lesdites gouttelettes sont soumises à une condensation par coalescence sur une surface mouillée et à une condensation par contact avec une surface froide, et **en ce que** la nébulisation et la condensation par coalescence sur une surface mouillée sont réalisées dans une première enceinte, la condensation par contact avec une surface froide est réalisée dans une deuxième enceinte, les première et deuxième enceintes étant distinctes l'une de l'autre mais reliées l'une à l'autre.

23. Procédé selon la revendication 22, **caractérisé en ce que** la condensation des gouttelettes par contact avec une surface froide est réalisée dans une enceinte réfrigérée et contenant un garnissage.

24. Procédé selon l'une quelconque des revendications 22 et 23, **caractérisé en ce que** le milieu liquide comprend un ou plusieurs solvants choisis parmi l'eau, les solvants organiques et leurs mélanges.

## Patentansprüche

1. Vorrichtung (10) zum Extrahieren von gasförmigen, flüssigen und/oder festen Komponenten aus einem gasförmigen Medium und zum Konzentrieren dieser Komponenten in einem flüssigen Medium durch Vernebelung dieses flüssigen Mediums mittels des gasförmigen Mediums und zum Kondensieren der flüssigen Tröpfchen des flüssigen Mediums, welche den durch diese Vernebelung erzeugten Nebel bilden, wobei die Vorrichtung umfasst:
- ein erstes Gehäuse (20, 120) zum Vernebeln und zum Kondensieren der Tröpfchen durch Koaleszenz auf einer nassen Oberfläche, wobei das erste Gehäuse einen oberen Teil (24, 123) und einen unteren Teil (21, 121) aufweist, welcher zur Aufnahme des flüssigen Mediums vorgesehen ist, und welches mit einer Leitung (35) zur Zufuhr des gasförmigen Mediums, Mitteln (31, 33, 131, 133) zum Vernebeln des flüssigen Mediums, und einer ersten Leitung (45) zum Entfernen des gasförmigen Mediums ausgestattet ist;
- Mittel (60) zum Erzeugen eines Unterdrucks oder Überdrucks im Inneren des ersten Gehäuses, um zu ermöglichen, dass das gasförmige Medium in einem kontinuierlichen Strom in das erste Gehäuse eindringt, dort zirkuliert, und daraus entfernt wird,
und **dadurch gekennzeichnet, dass** es ferner umfasst:
- zumindest ein zweites Gehäuse (40) zum Kondensieren der Tröpfchen durch Kontakt mit einer kalten Oberfläche, wobei dieses zweite Gehäuse mit der zweiten Leitung (45) zum Entfernen des gasförmigen Mediums des ersten Gehäuses verbunden ist, und mit einer zweiten Leitung (50) zum Entfernen des gasförmigen Mediums ausgestattet ist; und
- Mittel (52) zum Kühlen des zweiten Gehäuses.

2. Vorrichtung (10) nach Anspruch 1, **dadurch gekennzeichnet, dass** die Leitung (35) zur Zufuhr des gasförmigen Mediums des ersten Gehäuses (20, 120) ein erstes Ende (35a), welches außerhalb dieses ersten Gehäuses angeordnet ist, und ein zweites Ende (35b), welches in dem ersten Gehäuse angeordnet ist, aufweist, wobei die Mittel zum Vernebeln umfassen:
- eine Vernebelungsdüse (31, 131), welche im Bereich des zweiten Endes (35b) dieser Zufuhrleitung angeordnet ist, und welche aus mindestens einer Öffnung (32, 132) besteht; und
- ein Vernebelungsrohr (33, 133), welches mit zwei Öffnungen (133a, 133b) ausgestattet ist, wobei eine erste Öffnung (133a) im unteren Teil des ersten Gehäuses angeordnet ist und eine zweite Öffnung (133b) der Öffnung (32, 132) der Vernebelungsdüse benachbart ist (31, 131).

3. Vorrichtung (10) nach Anspruch 2, **dadurch gekennzeichnet, dass** die Vernebelungsdüse (31) durch eine Verringerung des Abschnitts der Zufuhrleitung (35) des gasförmigen Mediums des ersten Gehäuses (20) ausgebildet ist.

4. Vorrichtung (10) nach Anspruch 2, **dadurch gekennzeichnet, dass** die Vernebelungsdüse (131) aus einer Komponente besteht, welche das zweite Ende (35b) der Zufuhrleitung (35) des gasförmigen Mediums des ersten Gehäuses (120) kontaktiert.

5. Vorrichtung (10) nach einem der Ansprüche 2 bis 4, **dadurch gekennzeichnet, dass** die Öffnung (32) der Vernebelungsdüse (31) in Richtung auf den oberen Teil des ersten Gehäuses (20) ausgerichtet ist, und die zweite Öffnung (33b) des Vernebelungsrohres (33) unmittelbar über dieser Öffnung angeordnet ist.

6. Vorrichtung (10) nach einem der Ansprüche 2 bis 5, **dadurch gekennzeichnet, dass** das erste Gehäuse (20) aus drei Teilen besteht:
- einem Reservoir (21), welches den unteren Teil des ersten Gehäuses bildet, und welches dazu bestimmt ist, das flüssige Medium zu enthalten;
- einer Vernebelungskammer (23), welche den Zwischenabschnitt des ersten Gehäuses bildet, und in der sich die Öffnung der Vernebelungsdüse (32) und die zweite Öffnung (33b) des Vernebelungsrohres (31) befinden; und
- einer Kondensationskuppel (24), welche den oberen Teil des ersten Gehäuses bildet.

7. Vorrichtung (10) nach Anspruch 6, **dadurch gekennzeichnet, dass** das zweite Gehäuse (40) eine Basis (41) und ein Oberteil (46) aufweist, wobei die erste Leitung (45) zum Entfernen des gasförmigen Mediums ein Knie ist, welches die Vernebelungskammer (23) des ersten Gehäuses (20) mit der Basis (41) des zweiten Gehäuses verbindet.

8. Vorrichtung (10) nach einem der Ansprüche 2 bis 4, **dadurch gekennzeichnet, dass** die Öffnung (132) der Vernebelungsdüse (131) in Richtung auf den unteren Abschnitt des ersten Gehäuses (120) gerichtet ist, und die zweite Öffnung (133b) des Vernebelungsrohres (133) unmittelbar unter dieser Öffnung angeordnet ist.

9. Vorrichtung (10) nach einem der Ansprüche 2 bis 4 oder 8, **dadurch gekennzeichnet, dass** das erste Gehäuse (120) vorzugsweise aus zwei Teilen besteht:
- einem Reservoir (121), welches den unteren Teil des ersten Gehäuses bildet, und welches dazu bestimmt ist, das flüssige Medium zu enthalten, wobei das Reservoir einen Boden (151) aufweist, dessen Oberfläche kleiner als ein Querschnitt dieses Reservoirs ist, wobei der Querschnitt im Betriebszustand des Gerätes die Oberfläche des flüssigen Mediums kontaktiert; und
- eine Vernebelungskammer (123), welche den oberen Teil der Vorrichtung bildet, und in der die Öffnung (132) der Vernebelungsdüse (131) und die zweite Öffnung (133b) des Vernebelungsrohres (133) angeordnet sind.

10. Vorrichtung (10) nach Anspruch 9, **dadurch gekennzeichnet, dass** das Reservoir (123) eine Form aufweist, die sich von unten nach oben erweitert.

11. Vorrichtung (10) nach Anspruch 9 oder Anspruch 10, **dadurch gekennzeichnet, dass** die Vernebelungskammer (123) aus zwei Wänden besteht: einer Außenwand (123a), welche an der ersten Leitung (45) zum Entfernen des gasförmigen Mediums zum Anschluß kommt, und einer Innenwand (123b), welche kopfseitig und beabstandet von dem Reservoir (121) angeordnet ist, wobei diese Innenwand die Vernebelungskammer teilt, um einen Mittelabschnitt (153), welcher innerhalb der Innenwand (123b) angeordnet ist, und einen Randabschnitt (154), welcher zwischen den Außen- (123a) und Innenwänden (123b) angeordnet ist, zu bilden, und wobei die zweite Öffnung (133b) des Vernebelungsrohres (133) und die Öffnung (132) der Vernebelungsdüse (131) in dem Mittelabschnitt angeordnet sind.

12. Vorrichtung (10) nach einem der Ansprüche 9 bis 11, **dadurch gekennzeichnet, dass** das zweite Gehäuse (40) eine Basis (41) und ein Oberteil (46) aufweist, wobei die erste Leitung (45) zum Entfernen des gasförmigen Mediums ein Knie ist, welche die Vernebelungskammer (123) des ersten Gehäuses (120) mit der Basis (41) des zweiten Gehäuses verbindet.

13. Vorrichtung (10) nach einem der Ansprüche 8 bis 12, **dadurch gekennzeichnet, dass** die erste Kammer (120) eine Komponente (167) zur Stabilisierung der Oberfläche des flüssigen Mediums umfasst, wobei diese Komponente vorgesehen ist, um unter und in kleinem Abstand von dieser Oberfläche im Betriebszustand des Gerätes angeordnet zu sein, und um gleichzeitig die Tropfen aus der Kondensation des Nebels hinzudurchlassen.

14. Vorrichtung nach einem der vorhergehenden Ansprüche, **dadurch gekennzeichnet, dass** die Mittel (52) zum Kühlen des zweiten Gehäuses (40) eine Peltier-Zelle sind.

15. Vorrichtung (10) nach einem der vorhergehenden Ansprüche, **dadurch gekennzeichnet, dass** das zweite Gehäuse (40) eine Beladung (42) umfasst.

16. Vorrichtung (10) nach einem der vorhergehenden Ansprüche, **dadurch gekennzeichnet, dass** der Unterteil des ersten Gehäuses (20, 120) mit zumindest einem System (22, 122) zum Nachweis oder zur Dosierung der gasförmigen, flüssigen und/oder festen Komponenten versehen ist, welche aus dem gasförmigen Medium abgeführt und in dem flüssigen Medium im Betriebszustand der Vorrichtung konzentriert werden.

17. Vorrichtung (10) nach einem der vorhergehenden Ansprüche, **dadurch gekennzeichnet, dass** der untere Abschnitt (21, 121) des ersten Gehäuses (20, 120) abnehmbar ist.

18. Vorrichtung nach einem der Ansprüche 7 oder 8 oder 12 bis 17, **dadurch gekennzeichnet, dass** das erste Gehäuse (20, 120) und das zweite Gehäuse (40) auseinanderbaubar sind, und dass die Bestandteile, aus denen sie gebildet sind, in einem zusammengebauten Zustand dieser Gehäuse miteinander flüssigkeitsdicht verbunden sind.

19. Vorrichtung (10) nach einem der vorhergehenden Ansprüche, **dadurch gekennzeichnet, dass** sie Mittel (60) zum Erzeugen eines Unterdrucks im Inneren des ersten Gehäuses (20, 120) umfasst, und dass diese Mittel eine Saugpumpe sind, die an die zweite Leitung (50) zum Entfernen des gasförmigen Mediums angeschlossen ist.

20. Vorrichtung (10) nach einem der vorhergehenden Ansprüche, **dadurch gekennzeichnet, dass** sie ferner ein System zur Versorgung mit elektrischer Energie umfasst, welches Verbindungsmittel zu einer externen Quelle elektrischer Energie und Mittel zur Versorgung mit elektrischer Energie für seinen autonomen Betrieb umfasst.

21. Vorrichtung (10) nach einem der vorhergehenden Ansprüche, **dadurch gekennzeichnet, dass** sie in Form einer kompakten, von einer Person tragbaren oder ziehbaren Struktur (11) ist.

22. Verfahren zum Extrahieren von gasförmigen, flüssigen und/oder festen Komponenten aus einem gasförmigen Medium und zum Konzentrieren dieser Komponenten in einem flüssigen Medium durch Vernebelung dieses flüssigen Mediums mittels des gasförmigen Mediums und Kondensieren der flüssigen Tröpfchen des flüssigen Mediums, welche den durch diese Vernebelung erzeugten Nebel bilden, **dadurch gekennzeichnet, dass** die Tröpfchen einer Kondensation durch Koalezenz auf einer nassen Oberfläche und Kondensation durch Kontakt mit einer kalten Oberfläche ausgesetzt werden, und dass die Vernebelung und die Kondensation durch Koalezenz auf einer nassen Oberfläche in einem ersten Gehäuse und die Kondensation durch Kontakt mit einer kalten Oberfläche in einem zweiten Gehäuse erfolgen, wobei das erste und das zweite Gehäuse verschieden voneinander, aber miteinander verbunden sind.

23. Verfahren nach Anspruch 22, **dadurch gekennzeichnet, dass** die Kondensation der Tröpfchen durch den Kontakt mit einer kalten Oberfläche in einem gekühlten Gehäuse, welches eine Beladung umfasst, erfolgt.

24. Verfahren nach einem der Ansprüche 22 und 23, **dadurch gekennzeichnet, dass** das flüssige Medium ein oder mehrere Lösungsmittel, ausgewählt aus Wasser, organischen Lösungsmitteln und Mischungen davon, umfasst.

## Claims

1. Apparatus (10) for extracting gaseous, liquid and/or solid elements from a gaseous medium and concentrating them in a liquid medium, by nebulizing this liquid medium by means of the gaseous medium and condensing the droplets of liquid medium forming the mist produced by this nebulization, the said apparatus comprising:
- a first enclosure (20, 120) for nebulizing and condensing the droplets by coalescence on a wetted surface, this first enclosure having an upper part (24, 123) and a lower part (21, 121) intended to contain the liquid medium, and which is provided with a conduit (35) for delivering the gaseous medium, means (31, 33, 131, 133) for nebulizing the liquid medium, and a first conduit (45) for discharging the gaseous medium;
- means (60) for depressurizing or pressurizing the interior of the first enclosure to allow the gaseous medium to enter this first enclosure, circulate therein and be discharged therefrom, in a continuous flow;
and being **characterized in that** it furthermore comprises:
- at least one second enclosure (40) for condensing the droplets by contact with a cold surface, this second enclosure being connected to the conduit (45) for discharging the gaseous medium from the first enclosure, and being provided with a second conduit (50) for discharging the gaseous medium; and
- means (52) for cooling this second enclosure.

2. Apparatus (10) according to claim 1, **characterized in that**, the gaseous medium delivery conduit (35) of the first enclosure (20, 120) having a first end (35a) located outside this first enclosure and a second end (35b) housed in this first enclosure, the means for nebulizing comprise:
- a nebulization nozzle (31, 131) which is located level with the second end (35b) of this conduit and which has at least one orifice (32, 132); and
- a nebulization tube (33, 133) provided with two openings (133a, 133b): a first opening (133a) which is located in the lower part of the first enclosure, and a second opening (133b) which is flush with the orifice (32, 132) of the nebulization nozzle (31, 131).

3. Apparatus (10) according to claim 2, **characterized in that** the nebulization nozzle (31) is formed by a reduction in the cross section of the gaseous medium delivery conduit (35) of the first enclosure (20).

4. Apparatus (10) according to claim 2, **characterized in that** the nebulization nozzle (131) consists of a piece attached to the second end (35b) of the gaseous medium delivery conduit (35) of the first enclosure (120).

5. Apparatus (10) according to any one of claims 2 to 4, **characterized in that** the orifice (32) of the nebulization nozzle (31) is oriented towards the upper part of the first enclosure (20), and the second opening (33b) of the nebulization tube (33) is located immediately above this orifice.

6. Apparatus (10) according to any one of claims 2 to 5, **characterized in that** the first enclosure (20) is composed of three parts:
- a reservoir (21) which forms the lower part of the first enclosure and which is intended to contain the liquid medium;
- a nebulization chamber (23) which forms the intermediate part of the first enclosure and which houses the orifice of the nebulization nozzle (32) and the second opening (33b) of the nebulization tube (31); and
- a condensation dome (24) which forms the upper part of the first enclosure.

7. Apparatus (10) according to claim 6, **characterized in that**, the second enclosure (40) having a base (41) and a top (46), the first conduit (45) for discharging the gaseous medium is a conduit with a bend which connects the nebulization chamber (23) of the first enclosure (20) to the base (41) of the second enclosure.

8. Apparatus (10) according to any one of claims 2 to 4, **characterized in that** the orifice (132) of the nebulization nozzle (131) is oriented towards the lower part of the first enclosure (120), and the second opening (133b) of the nebulization tube (133) is located immediately below this orifice.

9. Apparatus (10) according to any one of claims 2 to 4 and 8, **characterized in that** the first enclosure (120) is preferably composed of two parts:
- a reservoir (121) which forms the lower part of this first enclosure and which is intended to contain the liquid medium, which reservoir has a bottom (151) whose surface area is less than a cross section of this reservoir, this cross section being flush with the surface of the liquid medium when the apparatus is operational; and
- a nebulization chamber (123) which forms the upper part of the apparatus and which houses the orifice (132) of the nebulization nozzle (131) and the second opening (133b) of the nebulization tube (133).

10. Apparatus (10) according to claim 9, **characterized in that** the reservoir (123) has a shape which tapers from the bottom upwards.

11. Apparatus (10) according to claim 9 or claim 10, **characterized in that** the nebulization chamber (123) has two walls: an outer wall (123a) onto which the first conduit (45) for discharging the gaseous medium is to be connected, and an inner wall (123b) which is located entirely above and at a distance from the reservoir (121), this inner wall dividing the nebulization chamber in order to form a central part (153) located inside the inner wall (123b) and a peripheral part (154) located between the outer wall (123a) and the inner wall (123b), the second opening (133b) of the nebulization tube (133) and the orifice (132) of the nebulization nozzle (131) being housed in the said central part.

12. Apparatus (10) according to any one of claims 9 to 11, **characterized in that**, the second enclosure (40) having a base (41) and a top (46), the first conduit (45) for discharging the gaseous medium is a conduit with a bend which connects the nebulization chamber (123) of the first enclosure (120) to the base (41) of the second enclosure.

13. Apparatus (10) according to any one of claims 8 to 12, **characterized in that** the first enclosure (120) comprises an element (167) for stabilizing the surface of the liquid medium, this element being intended to lie below and at a short distance from this surface when the apparatus is operational, while allowing the drops due to the condensation of the mist to pass though.

14. Apparatus according to any one of the preceding claims, **characterized in that** the means (52) for cooling the second enclosure (40) are a Peltier effect cell.

15. Apparatus (10) according to any one of the preceding claims, **characterized in that** the second enclosure (40) contains packing (42).

16. Apparatus (10) according to any one of the preceding claims, **characterized in that** the lower part of the first enclosure (20, 120) is provided with at least one system (22, 122) for detecting or quantitatively determining the gaseous, liquid and/or solid elements extracted from the gaseous medium and concentrated in the liquid medium when the apparatus is operational.

17. Apparatus (10) according to any one of the preceding claims, **characterized in that** the lower part (21, 121) of the first enclosure (20, 120) is removable.

18. Apparatus (10) according to any one of claims 7 and 8 and 12 to 17, **characterized in that** the first enclosure (20, 120) and the second enclosure (40) can be dismantled, and **in that** their constituent parts are connected together in a leaktight fashion when these enclosures are assembled.

19. Apparatus (10) according to any one of the preceding claims, **characterized in that** it comprises means (60) for depressurizing the interior of the first enclosure (20, 120), and **in that** these means are a suction pump which is connected to the second conduit (50) for discharging the gaseous medium.

20. Apparatus (10) according to any one of the preceding claims, **characterized in that** it furthermore comprises an electrical power supply system (80) comprising means for connection to an external electrical power source and electrical power supply means for its autonomous operation.

21. Apparatus (10) according to any one of the preceding claims, **characterized in that** it is in the form of a compact structure (11) which can be carried or pulled by a single person.

22. Method for extracting gaseous, liquid and/or solid elements from a gaseous medium and concentrating them in a liquid medium, by nebulizing this liquid medium by means of the gaseous medium and condensing the droplets of liquid medium forming the mist produced by this nebulization, **characterized in that** said droplets are subjected to a condensation by coalescence on a wetted surface and to a condensation by contact with a cold surface, and **in that** the nebulization and condensation by coalescence on a wetted surface are carried out in a first enclosure, the condensation by contact with a cold surface is carried out in a second enclosure, the first and second enclosures being distinct from one another but connected together.

23. Method according to claim 22, **characterized in that** the condensation of the droplets by contact with a cold surface is carried out in a refrigerated enclosure which contains packing.

24. Method according to any one of claims 22 and 23, **characterized in that** the liquid medium comprises one or more solvents selected from water, organic solvents and mixtures thereof.
